# EUROPÄISCHE PATENTANMELDUNG

(11) **EP 0 998 881 A2**
(43) Veröffentlichungstag der Anmeldung: **10.05.2000**
(21) Anmeldenummer: 99250124.7
(22) Anmeldetag: 16.04.1999
(51) Int. Cl.: A61C 5/08

(54) **Schmuckzahnkrone**

(30) Priorität: 03.11.1998 DE 29820180 U
(71) Anmelder: Matern, Sabine, 10707 Berlin (DE); Matern, Thomas, 10707 Berlin (DE)
(72) Erfinder: Matern, Sabine, 10707 Berlin (DE); Matern, Thomas, 10707 Berlin (DE)
(74) Vertreter: Wablat, Wolfgang, Dr.Dr.

(57) **Zusammenfassung**

Eine Schmuckzahnkrone umfaßt ein kappenartiges Außenteleskop (4), in dessen frontseitige Kronenverblendung (17), und zwar transparent unterhalb deren Oberfläche ein Bildmotiv oder -muster (20) integriert ist. Das so ausgebildete Außenteleskop ist auf ein fest mit dem Stumpf eines Frontzahnes oder einer Zahnbrücke verbundenes Innenteleskop (3) aufsteckbar und an diesem über verschiedene Stütz- und Friktionselemente (z.B. 5; 9) abgestützt und durch Reibungskräfte sicher, aber auswechselbar gehalten.

## Beschreibung

Die Erfindung betrifft eine Schmuckzahnkrone mit einer auf einer metallischen Kappe angebrachten zahnfarbenen Kronenverblendung und auf deren sichtbarem Teil vorgesehenen Verzierungselementen.

Zur Sanierung und kosmetischen Behandlung, insbesondere der sichtbaren Teile des menschlichen Gebisses wird vielfach einer Überkronung kranker oder ästhetischen Anforderungen nicht genügender Zähne vorgenommen. Es ist weiterhin bekannt, derartige Kronen mit Verzierungen, Schmucksteinen und dergleichen zu versehen, um auf diese Weise den ästhetischen Gesamteindruck des Gebisses zusätzlich zu beeinflussen und das äußere Erscheinungsbild der betreffenden Person zu verändern.

Eine derart vorgenommene Verzierung der Überkronung ist jedoch irreversibel oder kann, abgesehen von den Unannehmlichkeiten für den Benutzer und den hohen Kosten, nur mit großem Aufwand, d. h. durch Zerstören der verzierten und Anfertigen einer neuen Zahnkrone, rückgängig gemacht werden, da bei der Überkronung eine unlösbare Verbindung zwischen der Krone und dem Zahnstumpf hergestellt wird. Zum anderen ist der verzierte Zahn in seiner Eigenschaft als Schmuckelement nicht in übliche Weise wie ein Schmuckstück, zum Beispiel eine Nasenperle oder ein Ohrring, entfernbar oder austauschbar. Dadurch und durch die Art der bekannten Verzierung sind der Vielfalt der ästhetischen Gestaltung im Bereich der Frontzähne durch Schmuckelemente deutliche Grenzen gesetzt.

Der Erfindung liegt daher die Aufgabe zugrunde, eine Schmuckzahnkrone zu entwickeln, die dem Benutzer vielfältige, aber problemlos reversible Gestaltungsmöglichkeiten bietet.

Erfindungsgemäß wird die Aufgabe bei einer Schmuckzahnkrone mit einer auf einer metallischen Kappe angebrachten zahnfarbenen Kronenverblendung und auf deren sichtbarem Teil vorgesehenen Verzierungselementen durch ein kappenförmiges, fest mit einem Zahnstumpf des zu überkronenden bzw. zu verzierenden Frontzahnes oder der Zahnbrücke verbundenes Innenteleskop als Unterbau für ein auf dieses aufsteckbares, auswechselbares und durch Reibungskräfte gehaltenes kappenartiges Außenteleskop, in dessen frontseitige Kronenverblendung wahlweise ein Bildmotiv oder -muster transparent integriert ist, gelöst.

Der Grundgedanke der Erfindung liegt mit anderen Worten in der Schaffung eines den Zahnstumpf vollständig abdeckenden und schützenden Unterbaus und eines auf diesen teleskopisch aufsteckbaren und auf diesem abgestützten sowie durch Friktion in Abzugsrichtung gesicherten Aufsteckers mit in dessen Kronenverblendung eingearbeitetem Bild, wobei zum Austauschen des verzierten Aufsteckers ein zweiter, identisch geformter Aufstecker ohne Bild zur Verfügung steht.

Damit wird ein Aufstecksystem für eine Schmucküberkronung bereitgestellt, das ein beliebiges Austauschen der verzierten Zahnkrone gegen eine mit einem anderen Bildmotiv versehene Zahnkrone oder gegen eine in üblicher Weise in Zahnfarbe ausgeführte Krone ohne Bildmotiv gestattet, und zwar ohne daß die jeweilige Krone beim Austauschen zerstört oder der Zahnstumpf in Mitleidenschaft gezogen wird. Die aufsteckbare Schmuckzahnkrone bzw. die entsprechende Zahnkrone ohne Bild kann - im Gegensatz zu einer herkömmlichen Krone - mit geringem Aufwand repariert werden. Die als Aufstecker ausgebildete Schmuckzahnkrone sitzt auch nach mehrfachem Abziehen und Wiederaufstecken immer noch fest auf dem den Unterbau bildenden Innenteleskop. Zudem besteht die Möglichkeit, das Außenteleskop an den verblendungsfreien Metallteilen nachzuformen, um dadurch die Reibungskräfte zwischen Innen- und Außenteleskop wieder zu aktivieren.

In weiterer Ausbildung der Erfindung weist das Innenteleskop an seiner Außenfläche in Längsrichtung einen geraden (0°-Abwinkelung) Friktionsteil sowie Friktionsnuten auf. Diesen stehen auf der Innenfläche des Außenteleskops ein ebenfalls gerader (paralleler) Friktionsabschnitt und in die Friktionsnuten eingreifende Friktionsleisten gegenüber. Dadurch wird eine gute Reibwirkung erreicht und außerdem bilden die Friktionsleisten und -nuten eine Führung zum lagesicheren Aufschieben des verbleibenden Außenteleskosp.

Gemäß einem weiteren Merkmal der Erfindung befindet sich in der Rückseite des Außenteleskops eine von dessen offener Seite ausgehende Schlitzöffnung, die dem Außenteleskop eine bestimmte Elastizität verleiht und auch dessen Nachformung zur Reaktivierung der Reibungskräfte ermöglicht.

Über Stützelemente an seinen freien Rändern ist das Außenteleskop auf dem Innenteleskop auf einer von einer Zunge gebildeten Stützschulter, einer Stützstufe und einem Stützrand gelagert.

Aus der nachfolgenden Beschreibung einer beispielhaften Ausführungsform der Erfindung sowie den Unteransprüchen ergeben sich weitere Merkmale und vorteilhafte Ausgestaltungen der Erfindung.

Ein Ausführungsbeispiel der Erfindung wird anhand der Zeichnung näher erläutert. Es zeigen:
- Fig. 1: eine Schnittansicht eines erfindungsgemäß mit einer aufsteckbaren und auswechselbaren Schmucküberkronung versehenen Zahnstumpfes,
- Fig. 2: einen senkrechten Schnitt einer Zahnüberkronung nach Fig. 1,
- Fig. 3a und 3b: Rückansichten einer aus einem Außenteleskop (Fig. 3a) und einem Innenteleskop (Fig. 3b) gebildeten Schmuckzahnkrone und
- Fig. 4a und 4b: Vorderansichten der Überkronungselemente nach Fig. 3, wobei Fig. 4a das Innenteleskop und Fig. 4b das Außenteleskop darstellt.

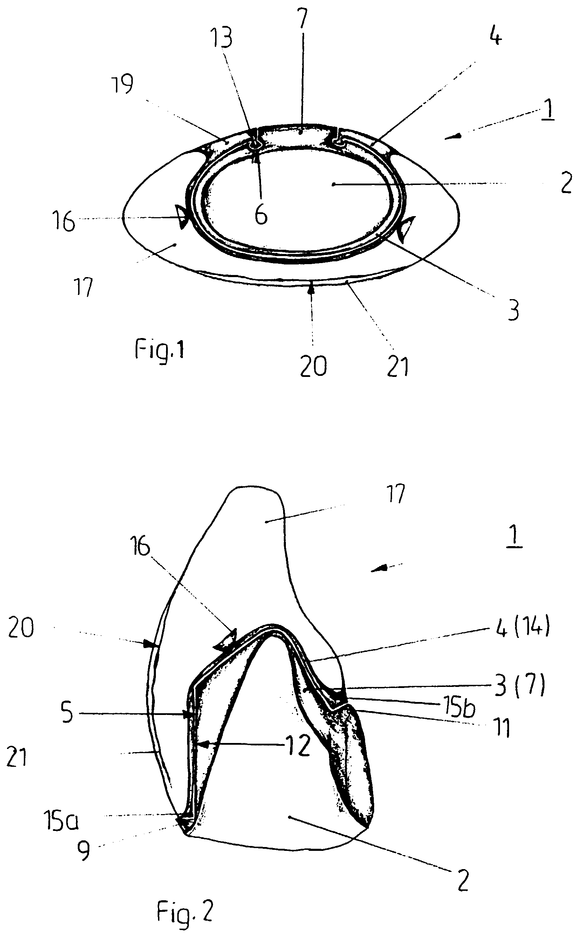

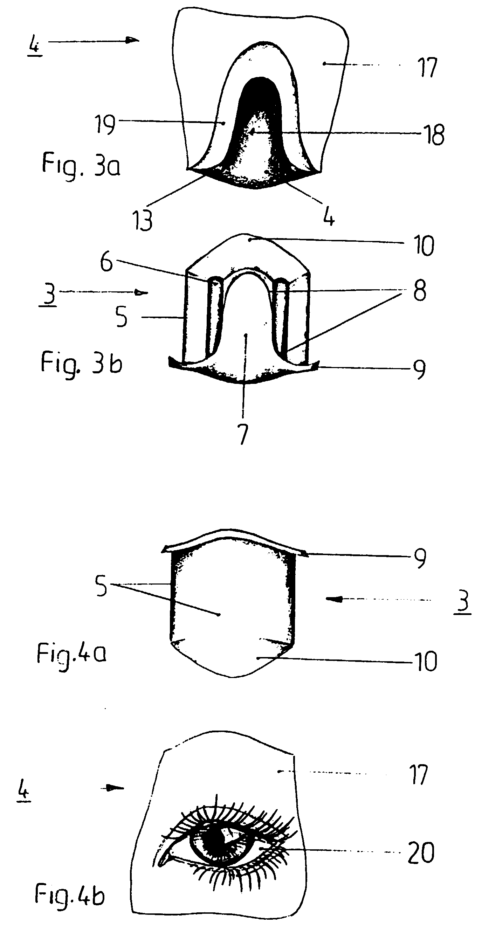

Die Schmuckzahnkrone 1 besteht aus einem mit einem Zahnstumpf 2 fest verbundenen Innenteleskop (Unterbau) 3 (Fig. 3b, Fig. 4a) und einem auf dieses aufsteckbaren Außenteleskop (Aufstecker) 4 (Fig. 3a, und 4b). Das Innenteleskop 3, das den Unterbau für die eigentliche Überkronung darstellt, ist ein den Zahnstumpf 2 umschließender - einseitig offener - Hohlkörper (Kappe) mit einem geraden, d. h. 0° abgewinkelten Friktionsteil 5 und in diesen eingearbeiteten Friktionsnuten 6, einer zwischen den Friktionsnuten 6 oralseitig ausgebildeten Zunge 7 mit Stützschulter 8, einem, ausgehend von der Zunge 7, an der offenen Seite umlaufenden Stützrand 9 und einem etwa konisch zulaufenden Abdeckteil 10. Wie aus Fig. 2 ersichtlich ist, verfügt das Innenteleskop 3 über eine zusätzliche Stützstufe 11.

Das ebenfalls kappenartig ausgebildete Außenteleskop 4 ist in seiner Innenkontur im wesentlichen der Außenkontur des Innenteleskops 3 angepaßt, das heißt, es verfügt über einen in Längsrichtung verlaufenden geraden Friktionsabschnitt 12 mit Friktionsleisten 13, eine konisch zulaufende Kappendecke 14 entsprechend dem Abdeckteil 10 und über Stützelemente 15a, 15b. An der vom Innenteleskop 3 abgewandten Außenseite des Außenteleskops 4 sind Retentionshalbperlen 16 zur mechanischen Verankerung der Kronenverblendung 17 angebracht. Insbesondere aus Fig. 3a wird deutlich, daß an der Rückseite des Außenteleskops 4 eine von dessen offener Unterseite ausgehende Schlitzöffnung 18 verbleibt.

Die Kronenverblendung 17 besteht aus einer kunststoffgebundenen, durch Licht aushärtbaren Keramik (Keramik-Kunststoff-Verbindung), die verschleiß fest ist und über eine hohe Elastizität und Schlagfestigkeit verfügt. Auf die Verblendung 17 ist ein Bildmotiv oder -muster 20 aus Lackfarbe (wassergebundene Speziallackfarbe), glitzernden Folienplättchen und ähnlichen Stoffen aufgetragen und mit einer dünnen kratz- und stoßfesten, transparenten Verblendungsschicht 21 versiegelt. Für das Innen- und das Außenteleskop wird eine verschleißfeste und federharte metallische Legierung auf Paladium-Basis verwendet.

Zur Anfertigung der Überkronung wird zunächst das mit seiner Innenkontur entsprechend der Form des Zahnstumpfes 2 ausgebildete Innenteleskop 3 als Unterbau auf den Zahnstumpf 2 zementiert. Das mit einer in Zahnfarbe ausgeführten Verblendung 17 und mit einem Bildmotiv 20 versehene Außenteleskop 4 wird mit seinen Friktionsleisten 13 in die Friktionsnuten 6 eingeführt und auf das Innenteleskop 3 aufgesteckt. Die Friktionsleisten 13 und Friktionsnuten 6 sorgen für eine gute Führung beim Aufstecken des Außenteleskops und tragen - zusätzlich zu der durch die gerade Ausbildung des Friktionsteils 5 und des an diesen nach dem Aufschieben angrenzenden Friktionsabschnittes 12 - zu einem festen Sitz des Außenteleskops 4 auf dem Innenteleskop 3 bei. Nach dem Aufschieben ruht das Außenteleskop 4 auf der Stützschulter 8, dem Stützrand 9 und der Stützstufe 11 des Innenteleskops und wird in entgegengesetzter Richtung durch Reibungskräfte und seine durch die Schlitzöffnung 18 und das verwendete Material bedingte Federwirkung an dem Innenteleskop gehalten. Das Außenteleskop 4 mit dem auf der Vorderseite seiner Verblendung dargestellte Bildmotiv ist somit leicht austauschbar und kann durch ein anderes Außenteleskop mit einem anderen Bild oder lediglich mit zahnfarbener Kronenverblendung ohne Bild ersetzt werden. Es liegt somit im Ermessen des Benutzers, ob er eine Schmuckzahnkrone trägt oder nicht. Selbst häufiges Wechseln der Schmuckzahnkrone 1 wirkt sich nicht nachteilig auf deren festen Sitz aus, da das Metall des Außenteleskops einerseits aus einem federelastischen Werkstoff besteht und andererseits die Reibung durch eine nachträgliche Formgebung im Bereich der nicht mit einer Verblendung besetzten metallischen Teile (verblendungsfreier Metallrand 19) des Außenteleskops 4 wieder aktiviert werden kann.

Die Erfindung ist nicht auf das oben beschriebene Ausführungsbeispiel beschränkt. Vielmehr sind im Rahmen der Erfindung, deren Grundgedanke in der auswechselbaren Ausbildung der Schmuckzahnkrone aus einem festen Innenteleskop und einem auf diesem abgestützten und durch Reibungskräfte gehaltenen aufsteckbaren Außenteleskop mit einer Verblendung mit oder ohne Bildteil besteht, Modifikationen und Ergänzungen denkbar. Beispielsweise können in der zuvor beschriebenen Weise auch Stifte, Frontbrücken oder Prothesen mit den erfindungsgemäß auswechselbaren Kronen versehen werden, ohne den von der Erfindung gesteckten Rahmen zu verlassen.

### Bezugszeichenliste

- 1: Schmuckzahnkrone
- 2: Zahnstumpf
- 3: Innenteleskop (Unterbau)
- 4: Außenteleskop (Aufstecker)
- 5: Friktionsteil von 3
- 6: Friktionsnuten
- 7: Zunge
- 8: Stützschulter
- 9: Stützrand
- 10: Abdeckteil
- 11: zusätzliche Stützstufe
- 12: Friktionsabschnitt
- 13: Friktionsleisten
- 14: Kappendecke
- 15a, b: Stützelemente
- 16: Retentionshalbperlen
- 17: Kronenverblendung
- 18: Schlitzöffnung
- 19: verblendungsfreier Metallrand
- 20: Bildmotiv oder -muster
- 21: transparente Verblendungsschicht

## Patentansprüche

1. Schmuckzahnkrone mit einer auf einer metallischen Kappe angebrachten zahnfarbenen Kronenverblendung und auf deren sichtbarem Teil vorgesehenen Verzierungselementen, insbesondere für Frontzähne oder Frontzahnbrücken, gekennzeichnet durch ein kappenförmiges, fest mit dem Zahnstumpf (2) des zu überkronenden Frontzahnes oder der Zahnbrücke verbundenes Innenteleskop (3) als Unterbau für ein auf dieses aufsteckbares, auswechselbares und durch Reibungskräfte gehaltenes kappenartiges Außenteleskop (4), in dessen frontseitige Kronenverblendung (17) wahlweise ein Bildmotiv oder -muster (20) transparent integriert ist.

2. Schmuckzahnkrone nach Anspruch 1, dadurch gekennzeichnet, daß das Innenteleskop (3) an seiner Außenfläche einen geraden Friktionsteil (5) und in Längsrichtung verlaufende Friktionsnuten (6) aufweist, die jeweils mit einem geraden Friktionsabschnitt (12) und Friktionsleisten (13) an der Außenfläche des Außenteleskops (4) korrespondieren, daß das Außenteleskop (4) eine von dessen offener Seite ausgehende, in Längsrichtung an der Rückseite verlaufende Schlitzöffnung (18) und an seinem freien Rand Stützelemente (15a, 15b) aufweist und daß an der Rückseite des Innenteleskops (3) eine Zunge (7) mit Stützschulter (8), eine Stützstufe (11) sowie ein von der Zunge (7) ausgehender, am freien Rand des Innenteleskops (3) umlaufender Stützrand (9) zur Auflagerung des freien Randes des Außenteleskops (4) mit dessen Stützelementen (15a, 15b) ausgebildet sind.

3. Schmuckzahnkrone nach Anspruch 1 und 2, dadurch gekennzeichnet, daß im Bereich der Schlitzöffnung (18) ein verblendungsfreier, nachformbarer Metallrand (19) zum Aktivieren oder Korrigieren der Reibung zwischen dem Außenteleskop (4) und dem Innenteleskop (3) verbleibt.

4. Schmuckzahnkrone nach einem der Ansprüche 1 bis 3, dadurch gekennzeichnet, daß an der Außenfläche des Außenteleskops (4) Retentionshalbperlen (16) zur Verankerung der Kronenverblendung (17) angebracht sind.

5. Schmuckzahnkrone nach Anspruch 1, dadurch gekennzeichnet, daß das Bildmotiv oder -muster (20) unter der Oberfläche der Kronenverblendung (17) liegt und die über dem Bildmotiv oder -muster liegende Verblendungsschicht (21) transparent ist.

6. Schmuckzahnkrone nach Anspruch 1 und 5, dadurch gekennzeichnet, daß das Bildmotiv oder -muster (20) aus einer Speziallackfarbe und/oder verschiedenen Glitzerpartikeln besteht.

7. Schmuckzahnkrone nach einem der Ansprüche 1 bis 6, dadurch gekennzeichnet, daß die Kronenverblendung (17) aus einer verschleiß- und stoßfesten, elastischen kunststoffgebundenen Keramik besteht.

8. Schmuckzahnkrone nach einem der Ansprüche 1 bis 7, dadurch gekennzeichnet, daß das Außenteleskop (4) aus einer federharten, aber mechanisch nachformbaren Metallegierung, vorzugsweise auf Paladium-Basis, besteht.

9. Schmuckzahnkrone nach einer der Ansprüche 1 bis 8, dadurch gekennzeichnet, daß zum Wechseln des äußeren Erscheinungsbildes im Mundbereich des Trägers der Schmuckzahnkrone mindestens einem Außenteleskop (4) mit Bildmotivverblendung ein identisch geformtes Außenteleskop mit einer Kronenverblendung in Zahnfarbe ohne Bildmotiv zugeordnet ist.
